# FASCICULE DE BREVET EUROPEEN

(11) **EP 2 734 434 B1**
(45) Date de publication et mention de la délivrance du brevet: **10.08.2016**
(21) Numéro de dépôt: 12735929.7
(22) Date de dépôt: 19.06.2012
(51) Int. Cl.: B62D 65/12, B62D 65/00

(54) **MÉCANISME À CRÉMAILLÈRE DE SYSTÈME DE DIRECTION DE VÉHICULE, À CARTER À INTERFACE DE COUPLAGE**
GESTELLMECHANISMUS FÜR FAHRZEUGLENKUNGSSYSTEM MIT GEHÄUSE MIT KOPPLUNGSSTELLE
VEHICLE STEERING SYSTEM RACK MECHANISM WITH CASING HAVING COUPLING INTERFACE

(30) Priorité: 22.07.2011 FR 1156701
(43) Date de publication de la demande: 28.05.2014
(73) Titulaire: Peugeot Citroën Automobiles SA, 78140 Vélizy Villacoublay (FR)
(72) Inventeur: BERTHE, Benoit, F-92330 Sceaux (FR); PEREZ, Albert, F-78800 Houilles (FR)
(74) Mandataire: Rosenberg, Muriel Sylvie
(86) Numéro de dépôt international: PCT/FR2012/051374
(87) Numéro de publication internationale: WO 2013/014348

(56) Documents cités:
- DE-A1- 10 024 612
- DE-A1-102010 022 015
- FR-A1- 2 839 671
- US-A- 4 841 790
- US-A- 5 608 847
- US-A1- 2010 231 005
- US-A1- 2011 062 677

## Description

L'invention concerne les systèmes de direction de véhicule, éventuellement de type automobile, et plus précisément les mécanismes à crémaillère qui font partie de tels systèmes de direction.

On notera que l'invention concerne tout type de système de direction à crémaillère, qu'il soit assisté ou non assisté.

Par ailleurs, on notera également que l'on entend ici par « mécanisme à crémaillère » un ensemble comportant au moins un carter logeant une partie au moins d'une crémaillère de direction.

Le document US-A-4 841 790 décrit un actionneur électromécanique notamment pour système de direction, de fabrication simplifiée.

Comme le sait l'homme de l'art, un système de direction de véhicule est un équipement assez encombrant et relativement lourd, et pouvant présenter un centre de gravité décentré et/ou des constituants fragiles exposés aux chocs, en particulier dans le cas d'une direction assistée. Par conséquent, il est préférable, voire parfois réglementaire, que l'assemblage de ses constituants tout comme son installation dans un véhicule se fasse au moyen d'un manipulateur, afin d'éliminer autant que possible les risques de pathologie articulaire et d'accident des techniciens assembleurs ou installateurs, notamment sur des chaines de montage où les cadences peuvent être élevées.

On entend ici par « manipulateur » un appareil ou système, éventuellement robotisé, permettant de saisir, maintenir et déplacer un équipement déjà assemblé ou bien en cours d'assemblage.

Chaque fois que l'on conçoit un nouveau système de direction (éventuellement assisté), et donc presque chaque fois que l'on conçoit un nouveau modèle de véhicule, on est contraint de concevoir un nouveau manipulateur adapté à ce nouveau système de direction afin de tenir compte de ses particularités (notamment l'encombrement, les zones critiques, la masse et la position du centre de gravité) et/ou des problèmes d'ergonomie qu'il induit pour les techniciens assembleurs ou installateurs et/ou de sa cadence de production et/ou de son coût. Cela résulte principalement du fait que les systèmes de direction ne disposent pas d'une interface « générique » permettant leur couplage à un unique manipulateur.

Par ailleurs, du fait de l'absence de l'interface de couplage précitée, les manipulateurs sont fréquemment complexes, et donc leur utilisation de façon répétitive sur une chaîne de montage s'avère chronophage car elle impose systématiquement un cycle contraignant de mise en place, verrouillage, transport et déverrouillage. De plus, le couplage d'un manipulateur à un système de direction peut endommager certains constituants qui jouxtent la zone de couplage, comme par exemple un faisceau électrique, un capteur, un calculateur ou un filetage. Par conséquent, de nombreux techniciens préfèrent porter les systèmes de direction à la main ce qui pose un problème d'ergonomie et augmente non seulement les risques d'accident du travail mais également les risques d'endommagement partiel des systèmes de direction.

L'invention a donc pour but d'améliorer la situation, notamment en adjoignant aux mécanismes à crémaillère de système de direction une interface de couplage, potentiellement générique, destinée à permettre leur support et leur manipulation par un manipulateur, de préférence simple d'emploi.

Elle propose notamment à cet effet un mécanisme à crémaillère, destiné à faire partie d'un système de direction de véhicule, éventuellement de type automobile, et comprenant un carter, d'une part, logeant une partie au moins d'un mécanisme de contrôle de pivotement de roues de ce système, et, d'autre part, comprenant, sur une face externe, au moins deux protubérances munies chacune d'un trou traversant qui est défini suivant une direction choisie et qui est propre à permettre le passage d'un axe de couplage d'un manipulateur de crémaillère. Les trous traversants sont définis suivant une même première direction choisie, et les protubérances sont définies suivant des directions sensiblement parallèles entre elles et parallèles à une deuxième direction perpendiculaire à la première direction choisie, de sorte que leurs trous traversants soient sensiblement alignés l'un en face de l'autre suivant la première direction choisie.

Le carter avec ses protubérances à trou(s) traversant définissent ainsi une interface de couplage, potentiellement générique, qui permet son couplage simplifié avec un manipulateur à axe(s) de couplage correspondant, éventuellement générique.

Le mécanisme à crémaillère selon l'invention peut comporter d'autres caractéristiques qui peuvent être prises séparément ou en combinaison, et notamment :
➢ les première et deuxième directions peuvent être destinées à être respectivement et sensiblement parallèles à des directions transversale et verticale d'un véhicule ;
➢ en variante, les première et deuxième directions peuvent être destinées à être respectivement et sensiblement parallèles à des directions verticale et transversale d'un véhicule ;
   - les protubérances peuvent être espacées l'une de l'autre d'une distance qui est comprise entre environ 10 centimètres et environ 40 centimètres ;
   - les trous traversant peuvent présenter un diamètre compris entre environ 8 millimètres et environ 20 millimètres.

L'invention propose également un système de direction destiné à équiper un véhicule, éventuellement de type automobile, et comprenant un mécanisme à crémaillère du type de celui présenté ci-avant.

L'invention propose également un véhicule, éventuellement de type automobile, et comprenant au moins un système de direction du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en perspective, un exemple de système de direction assistée comprenant un exemple de réalisation d'un mécanisme à crémaillère selon l'invention (non revendiqué),
- la figure 2 illustre schématiquement, dans une vue de face, la partie du carter du mécanisme à crémaillère de la figure 1 qui comporte des protubérances de couplage,
- la figure 3 illustre schématiquement, dans une vue de face, un second exemple de réalisation d'une partie d'un carter de mécanisme à crémaillère selon l'invention, qui comporte des protubérances de couplage, et
- la figure 4 illustre schématiquement, dans une vue de face, une variante de réalisation de la partie du carter du mécanisme à crémaillère de la figure 3 qui comporte des protubérances de couplage.

Les dessins annexés pourront non seulement servir à compléter l'invention, mais aussi contribuer à sa définition, le cas échéant.

L'invention a notamment pour but de proposer un mécanisme à crémaillère MD destiné à faire partie d'un système de direction SD de véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule disposant d'au moins un système de direction SD, assistée ou non, et à mécanisme à crémaillère MD. Par conséquent, elle concerne également les cars (ou bus), les véhicules utilitaires, les camions, les engins de manutention et les engins de chantier, par exemple.

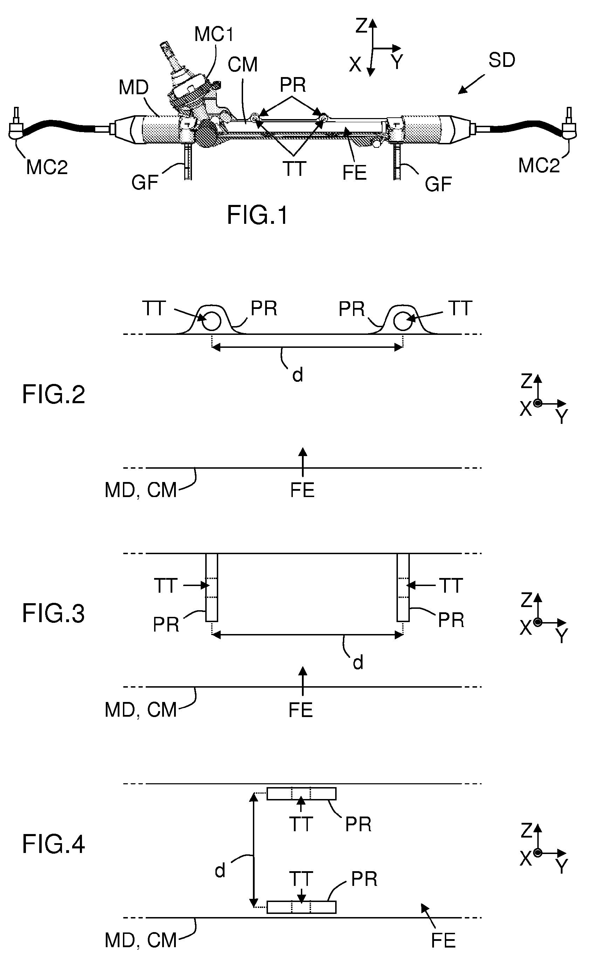

On a schématiquement représenté sur la figure 1 un exemple non limitatif de système de direction assistée SD comportant un mécanisme à crémaillère MD selon l'invention. Il s'agit ici plus précisément d'un système de direction assistée de type dit électrique. Mais l'invention concerne tout type de système de direction assistée ou non assistée et à crémaillère (de direction).

Sur les figures 1 à 4, la direction X est une direction dite « longitudinale » du fait qu'elle est destinée à être sensiblement parallèle à la direction longitudinale d'un véhicule, laquelle est sensiblement parallèle aux côtés latéraux comportant les portières latérales, la direction Y est une direction dite « transversale » du fait qu'elle est destinée à être sensiblement parallèle à la direction transversale d'un véhicule, laquelle est sensiblement perpendiculaire aux côtés latéraux comportant les portières latérales, et la direction Z est une direction dite verticale du fait qu'elle est destinée à être sensiblement parallèle à la direction verticale d'un véhicule, laquelle est sensiblement perpendiculaire au plancher.

Le mécanisme (à crémaillère) MD comprend un carter CM, d'une part, logeant une partie au moins d'une crémaillère de direction du système (de direction) SD destiné à contrôler le pivotement de roues (avant ou arrière), et donc une partie du mécanisme de contrôle de pivotement de roues, et, d'autre part, auquel sont notamment solidarisés des premiers moyens de couplage MC1 destinés à assurer son couplage à la partie inférieure de la colonne de direction d'un véhicule, et des moyens de fixation GF, comme par exemple des goujons, destinés à permettre sa fixation sur une partie structurelle ou de support du véhicule, comme par exemple un berceau.

Le carter CM est de préférence réalisé dans un matériau métallique, comme par exemple l'aluminium. Mais il pourrait être également réalisé en matériau plastique ou synthétique.

Le système de direction (ici assistée) SD comporte également des seconds moyens de couplage MC2 qui sont couplés aux deux extrémités opposées du mécanisme de contrôle de pivotement de roues et sont destinés à être couplés respectivement aux tringleries de pivotement des roues afin de les commander. Ces seconds moyens de couplage MC2 peuvent être, par exemple, des biellettes de direction.

On notera que le mécanisme MD peut également et éventuellement comprendre un ou plusieurs faisceaux électriques, un ou plusieurs capteurs, un calculateur et un ou plusieurs filetages, non référencés.

Selon l'invention, et comme cela est mieux illustré sur la figure 2, le carter CM du mécanisme MD comprend, sur sa face externe FE, au moins deux protubérances PR munies chacune d'au moins un trou traversant TT qui est défini suivant une direction choisie et qui est propre à permettre le passage d'un axe de couplage d'un manipulateur de crémaillère (non représenté).

On comprendra que les protubérances PR à trou(s) traversant(s) TT définissent une interface de couplage qui est potentiellement générique et qui permet son couplage simplifié avec un manipulateur à axe(s) de couplage correspondant, éventuellement générique. Un même manipulateur va donc pouvoir être utilisé dans différents lieux d'assemblage de mécanismes MD ou de systèmes de direction SD et/ou de véhicules, comme par exemple des chaînes de montage de fournisseurs d'équipements ou de constructeurs de véhicules, pour différents systèmes de direction SD, dès lors que ces derniers (SD) comportent un mécanisme MD dont l'interface de couplage (PR, TT) lui correspond.

On comprendra également que la définition d'au moins deux protubérances PR permet de bloquer le mécanisme MD suivant tous ses degrés de liberté. En fait, avec deux trous on peut bloquer quatre degrés de liberté. Il faut ensuite s'assurer que le manipulateur reste en place une fois installé et que le mécanisme MD ne bascule pas. Pour ce faire, on peut jouer sur l'épaisseur des protubérances PR et/ou utiliser un autre élément bloqueur embarqué sur le manipulateur.

On notera que les protubérances PR sont préférentiellement définies dans une zone du carter CM qui est dépourvue d'équipements, de sorte que l'introduction de chaque axe de couplage d'un manipulateur dans le(s) trou(s) traversant(s) correspondant(s) puisse se faire sans risque d'endommager un équipement. Dans le cas de l'exemple de la figure 1, la partie centrale du carter CM est bien adaptée à la présence de protubérances PR.

De préférence, les protubérances PR font partie intégrante d'une partie du carter CM. Dans ce cas, elles peuvent se présenter sous la forme de bossages obtenus par emboutissage et leurs trous traversants TT peuvent être obtenus par fraisage ou perçage. En variante, et pour réduire les coûts de fabrication, les bossages PR et leurs trous traversants TT peuvent être réalisés directement dans le « brut » de fonderie.

Mais on pourrait envisager une variante de réalisation dans laquelle les protubérances PR sont rapportées sur une partie du carter CM, par exemple par collage ou soudage.

Dans les exemples de réalisation illustrés non limitativement sur les figures 1 à 4, le mécanisme MD comprend deux protubérances PR équipées chacune d'un unique trou traversant TT. Mais il pourrait comporter plus de deux protubérances PR équipées chacune d'un ou plusieurs trous traversants TT ou bien seulement deux protubérances PR équipées chacune d'au moins deux trous traversants TT.

Au moins deux modes de réalisation de l'interface de couplage peuvent être envisagés.

Un premier mode de réalisation est illustré non limitativement sur les figures 1 et 2. Dans ce premier mode de réalisation les trous traversants TT sont définis suivant une même première direction choisie, et les protubérances PR sont sensiblement alignées suivant une même deuxième direction (ici Y) qui est perpendiculaire à la première direction choisie (ici X), afin que leurs trous traversants TT soient sensiblement parallèles entre eux.

On entend ici par « alignées suivant une même deuxième direction » le fait d'être placées approximativement dans un même plan (ici YZ) contenant la deuxième direction et espacées d'une distance d le long d'une droite parallèle à cette deuxième direction, tout en ayant les axes de leurs trous traversants TT sensiblement perpendiculaires à ce plan.

A titre d'exemple non limitatif, sur les figures 1 et 2 les première et deuxième directions sont respectivement les directions longitudinale X et transversale Y. Ce mode de réalisation permet à un manipulateur correspondant, à deux axes de couplage pouvant être placés parallèlement à la direction longitudinale X, d'entraîner en rotation le mécanisme MD (ou le système SD) dans le plan XY et/ou le plan YZ et/ou dans le plan XZ. Ce manipulateur peut par exemple comporter une pièce de couplage comportant une embase de forme générale parallélépipédique sur une face de laquelle saillent deux axes de couplage parallèles et dont les entraxes sont espacés de la distance d.

Un deuxième mode de réalisation est illustré non limitativement sur les figures 3 et 4. Dans ce deuxième mode de réalisation les trous traversants TT sont également définis suivant une même première direction choisie, et les protubérances PR sont définies suivant des directions qui sont sensiblement parallèles entre elles et parallèles à une deuxième direction qui est perpendiculaire à la première direction choisie, de sorte que leurs trous traversants TT soient sensiblement alignés l'un en face de l'autre suivant cette première direction choisie.

On entend ici par « définies suivant des directions qui sont sensiblement parallèles entre elles » le fait d'être placées approximativement dans deux plans parallèles (ZX ou XY) définis à partir de la deuxième direction.

Dans l'exemple non limitatif illustré sur la figure 3, les première et deuxième directions sont respectivement les directions transversale Y et verticale Z. Ce mode de réalisation permet à un manipulateur correspondant, à un ou deux axes de couplage parallèles, d'entraîner en rotation le mécanisme MD (ou le système SD) dans le plan XY et/ou le plan YZ.

Dans l'autre exemple non limitatif illustré sur la figure 4, les première et deuxième directions sont respectivement les directions verticale Z et transversale Y. Ce mode de réalisation permet à un manipulateur correspondant, à un ou deux axes de couplage parallèles, d'entraîner en rotation le mécanisme MD (ou le système SD) dans le plan YZ et/ou dans le plan ZX.

On notera que dans d'autres variantes de réalisation on peut envisager que les protubérances PR soient définis de sorte que leurs trous traversants TT soient définis suivant des directions choisies différentes, par exemple perpendiculaires entre elles. Mais, cela complexifie le manipulateur.

On notera également qu'il est préférable que les entraxes des protubérances PR soient espacés l'un de l'autre d'une distance d qui est comprise entre environ 10 centimètres et environ 40 centimètres. Par exemple, et au moins dans le cas des deux exemples illustrés sur les figures 2 et 3, la distance d peut être choisie sensiblement égale à environ 16 centimètres. Dans l'exemple de la figure 4, la distance d est de préférence strictement inférieure à la hauteur du carter CM suivant la direction verticale Z.

On notera également qu'il est préférable que les trous traversants TT présentent un diamètre compris entre environ 8 millimètres et environ 20 millimètres. Cette fourchette de valeurs est choisie de sorte qu'elle permette une visualisation rapide des trous traversants TT par un technicien et qu'elle facilite la mise en place par ce dernier de chaque axe de couplage du manipulateur dans chaque trou traversant TT correspondant. Par exemple, le diamètre précité peut être choisi sensiblement égal à environ 10 millimètres.

D'une manière générale, le dimensionnement des protubérances PR, la distance d entre protubérances PR et le diamètre des trous traversants TT sont choisis de manière à supporter toutes les contraintes du système de direction SD, notamment en matière de poids (suivant la direction verticale Z) et de moment (suivant la direction transversale Y), ainsi qu'éventuellement des contraintes réglementaires comme par exemple celles qui sont définies dans la norme d'ergonomie NF EN 1005 .

## Revendications

1. Mécanisme à crémaillère (MD) pour un système de direction (SD) de véhicule, ledit mécanisme à crémaillère (MD) comprenant un carter (CM) logeant une partie au moins d'un mécanisme de contrôle de pivotement de roues dudit système (SD), ledit carter (CM) comprenant, sur une face externe (FE), au moins deux protubérances (PR) munies chacune d'un trou traversant (TT) défini suivant une direction choisie, **caractérisé en ce que** lesdits trous traversants (TT) sont propres à permettre le passage d'un axe de couplage d'un manipulateur de crémaillère et sont définis suivant une même première direction choisie, et lesdites protubérances (PR) sont définies suivant des directions sensiblement parallèles entre elles et parallèles à une deuxième direction perpendiculaire à ladite première direction choisie, de sorte que leurs trous traversants (TT) soient sensiblement alignés l'un en face de l'autre suivant ladite première direction choisie.

2. Mécanisme à crémaillère selon la revendication 1, **caractérisé en ce que** lesdites première et deuxième directions sont destinées à être respectivement et sensiblement parallèles à des directions transversale et verticale d'un véhicule.

3. Mécanisme à crémaillère selon la revendication 1, **caractérisé en ce que** lesdites première et deuxième directions sont destinées à être respectivement et sensiblement parallèles à des directions verticale et transversale d'un véhicule.

4. Mécanisme à crémaillère selon l'une des revendications 1 à 3, **caractérisé en ce que** lesdites protubérances (PR) sont espacées l'une de l'autre d'une distance qui est comprise entre environ 10 centimètres et environ 40 centimètres.

5. Mécanisme à crémaillère selon l'une des revendications 1 à 4, **caractérisé en ce que** lesdits trous traversants (TT) présentent un diamètre compris entre environ 8 millimètres et environ 20 millimètres.

6. Système de direction (SD) pour un véhicule, **caractérisé en ce qu'**il comprend un mécanisme à crémaillère (MD) selon l'une des revendications précédentes.

7. Véhicule, **caractérisé en ce qu'**il comprend au moins un système de direction (SD) selon la revendication 6.

## Patentansprüche

1. Zahnstangenmechanismus (MD) für ein Fahrzeuglenkungssystem (SD), wobei der Zahnstangenmechanismus (MD) ein Gehäuse (CM) umfasst, das mindestens einen Teil eines Räderschwenksteuermechanismus des Systems (SD) aufnimmt, wobei das Gehäuse (CM) auf einer Außenseite (FE) mindestens zwei Vorsprünge (PR) umfasst, die jeweils mit einer durchgehenden Bohrung (TT) versehen sind, die entlang einer ausgewählten Richtung definiert ist, **dadurch gekennzeichnet, dass** die durchgehenden Bohrungen (TT) geeignet sind, das Durchgehen einer Kopplungsachse eines Zahnstangenmanipulators zu erlauben, und entlang einer gleichen ausgewählten ersten Richtung definiert sind, und wobei die Vorsprünge (PR) entlang von Richtungen definiert sind, die zueinander im Wesentlichen parallel und zu einer zweiten Richtung, die senkrecht zu der ausgewählten ersten Richtung ist, parallel sind, so dass ihre durchgehenden Bohrungen (TT) im Wesentlichen einander gegenüber entlang der ausgewählten ersten Richtung ausgerichtet sind.

2. Zahnstangenmechanismus nach Anspruch 1, **dadurch gekennzeichnet, dass** die erste und die zweite Richtung dazu bestimmt sind, jeweils und im Wesentlichen zu einer Querrichtung und vertikalen Richtung eines Fahrzeugs parallel zu sein.

3. Zahnstangenmechanismus nach Anspruch 1, **dadurch gekennzeichnet, dass** die erste und die zweite Richtung dazu bestimmt sind, jeweils und im Wesentlichen zur vertikalen und Querrichtung eines Fahrzeugs parallel zu sein.

4. Zahnstangenmechanismus nach einem der Ansprüche 1 bis 3, **dadurch gekennzeichnet, dass** die Vorsprünge (PR) voneinander um einen Abstand beabstandet sind, der zwischen etwa 10 Zentimeter und etwa 40 Zentimeter liegt.

5. Zahnstangenmechanismus nach einem der Ansprüche 1 bis 4, **dadurch gekennzeichnet, dass** die durchgehenden Bohrungen (TT) einen Durchmesser zwischen etwa 8 Millimeter und etwa 20 Millimeter aufweisen.

6. Lenkungssystem (SD) für ein Fahrzeug, **dadurch gekennzeichnet, dass** es einen Zahnstangenmechanismus (MD) nach einem der vorhergehenden Ansprüche umfasst.

7. Fahrzeug, **dadurch gekennzeichnet, dass** es mindestens ein Lenkungssystem (SD) nach Anspruch 6 umfasst.

## Claims

1. A rack mechanism (MD) for a vehicle steering system (SD), said rack mechanism (MD) including a casing (CM), on the one hand housing at least part of a mechanism that controls the pivoting of wheels of said system (SD), said casing (CM) including, on an external face (FE), at least two protrusions (PR) each equipped with a through-hole (TT) defined in a chosen direction, **characterized in that** said through-holes (TT) are able to allow through a coupling pin of a rack manipulator and are defined in a same first chosen direction, and said protrusions (PR) are defined in directions substantially parallel to one another and parallel to a second direction perpendicular to said first chosen direction, such that their through-holes (TT) are substantially aligned one facing the other in said first chosen direction.

2. The rack mechanism according to Claim 1, **characterized in that** said first and second directions are intended to be respectively and substantially parallel to transverse and vertical directions of a vehicle.

3. The rack mechanism according to Claim 1, **characterized in that** said first and second directions are intended to be respectively and substantially parallel to vertical and transverse directions of a vehicle.

4. The rack mechanism according to one of Claims 1 to 3, **characterized in that** said protrusions (PR) are spaced apart from one another by a distance which is comprised between approximately 10 centimetres and approximately 40 centimetres.

5. The rack mechanism according to one of Claims 1 to 4, **characterized in that** said through-holes (TT) have a diameter comprised between approximately 8 millimetres and approximately 20 millimetres.

6. A steering system (SD) for a vehicle, **characterized in that** it includes a rack mechanism (MD) according to one of the preceding claims.

7. A vehicle, **characterized in that** it includes at least one steering system (SD) according to Claim 6.
